# EUROPEAN PATENT SPECIFICATION

(11) **EP 3 633 180 B1**
(45) Date of publication and mention of the grant of the patent: **28.04.2021**
(21) Application number: 18465584.3
(22) Date of filing: 01.10.2018
(51) Int. Cl.: F02M 26/71, F02M 26/69, F02M 26/68, F16K 3/00, F16K 11/00, F02M 26/26, F02M 26/70

(54) **VALVE FOR CONTROLLING GAS FLOW AND SYSTEM FOR EXHAUST GAS RECIRCULATION TO AN INTERNAL COMBUSTION ENGINE**
VENTIL ZUR REGELUNG EINES GASFLUSSES UND SYSTEM ZUR ABGASRÜCKFÜHRUNG ZU EINER VERBRENNUNGSKRAFTMASCHINE
SOUPAPE POUR RÉGULER UN FLUX DE GAZ ET SYSTÈME DE RECIRCULATION DES GAZ D'ÉCHAPPEMENT VERS UN MOTEUR À COMBUSTION INTERNE

(43) Date of publication of application: 08.04.2020
(73) Proprietor: Vitesco Technologies GmbH, 30165 Hannover (DE)
(72) Inventor: Petca, Eduard Cornel, 300693 Timisoara (RO); Muresan, Daniel, 307220 Giroc (RO)

(56) References cited:
- DE-A1-102008 005 400
- FR-A1- 2 917 802
- US-A1- 2010 181 517

## Description

The present invention relates to a valve for controlling gas flow, for example a valve of an exhaust gas recirculation (EGR) system, comprising at least one gas inlet at least one first gas outlet, one second gas outlet and a valve device adapted for blocking or unblocking the first gas outlet and/or the second gas outlet and/or the gas inlet. Furthermore, it relates to a system for the regulation of exhaust gas in a vehicle.

EGR is a commonly used feature for minimising emissions of nitrogen oxides. For this purpose, exhaust gas is being passed towards a combustion chamber of an engine instead of being emitted. Special valves are being used for separation of the gas flow.

The amount of exhaust gas flowing back to the combustion chamber needs to be regulated, which is one main function of EGR-valves. Hence, the amount of recirculated gas can be adjusted with high precision to the current load point and operating mode of the engine.

Bypass valves are used as well in these systems for creating different flow paths. For example, an exhaust gas cooler may be interposed for provision of cooler gas, if this is required for the combustion process. Also, the exhaust gas cooler may be bypassed, if higher exhaust gas temperatures are required.

Document DE 10 2008 005 400 A1 discloses a fluid valve suitable to control and distribute a fluid flow in a system Further valves are disclosed in FR 2917802 A1 and US 2010 181517 A1.

It is an object of the present invention to provide a simple and robust valve. Furthermore, it is an object of the present invention to provide an economic system for the recirculation of exhaust gas in a vehicle.

This object is achieved by means of the valve according to claim 1 and the system according to claim 7. Advantageous embodiments and developments are objects of the dependent claims.

According to a first aspect of the invention, a valve for controlling gas flow is provided, the valve comprising at least one gas inlet, at least one first gas outlet and one second gas outlet. Furthermore, a valve device adapted for blocking or unblocking the first gas outlet and/or the second gas outlet and/or the gas inlet is provided.

The valve device according to the first aspect of the invention comprises an axially movable shaft, which is movable along a longitudinal axis L by an actuator. The actuator may be, amongst other possibilities, electrically powered. Typical EGR valve actuators include solenoids, torque motors, stepper motors, and DC motors.

According to the first aspect of the invention, a valve body is provided, comprising a first valve body element and a second valve body element. The first valve body element and the second valve body element are fixedly connected to each other. The term "fixedly connected" comprises welding, adhesive bonding, screwing as well as forming it in one piece, amongst other examples. The valve body is arranged on the axially movable shaft and hence is axially displaceable.

Purpose of the first valve body element is blocking or unblocking the gas inlet, while the second valve body element is designed for blocking or unblocking the first gas outlet or the second gas outlet.

The axially movable shaft is mounted in a way that it moves inside the cavity along the longitudinal axis L. As a consequence, the cavity is arranged along the longitudinal axis L.

Axial displacement of the shaft leads to axial displacement of the first valve body element and of the second valve body element. Hence, an axial position of the shaft corresponds to a position of the first valve body element (blocking or unblocking the gas inlet) and of the second valve body element (blocking or unblocking the first and/or the second gas outlet) .

Therefore, blocking and unblocking of the gas inlet and the gas outlets may be realised only by a linear movement of the shaft along the longitudinal axis L.

According to an embodiment of the invention, the gas volume flow is adjustable by means of the valve body. This way the valve has not only one, but at least two functional aspects: it combines a bypass valve and a dosing unit, which saves space in the motor compartment and is more economic than using two different items.

According to an embodiment of the invention, the valve body is blocking the gas inlet in a default position. Default position is hereby defined as a de-energised state of the actuator. In case of a technical malfunction, the valve stays in this position, which shuts down the EGR function and prevents damage to the motor unit.

According to an embodiment, the valve body is movable to block the first gas outlet or the second gas outlet while unblocking the gas inlet. If both gas outlets are arranged consecutive to each other in the axial direction, this can be achieved by the first valve body element having an axial extension d₀ small enough compared to an axial distance D between the first outlet and the second outlet. This way it is possible to choose a position of the second valve body element to either block the first or the second outlet, when the inlet is unblocked.

This embodiment has the advantage, that the gas flow can be controlled and bypassed in the direction needed.

According to the invention, the valve body is movable to unblock gas inlet and both first gas outlet and second gas outlet at the same time. This is achieved by the shaft being moveable thus far in an axial direction that the valve body is arranged on one side of the gas inlet, the first gas outlet and the second gas outlet, and not in between.

According to an embodiment, the valve body is movable to unblock the first gas outlet by blocking the second gas outlet and vice versa. The advantage of this aspect is, that by moving only one valve body, two functions are fulfilled, which saves space in the motor compartment and is more economic due to lesser motor unit weight, lesser parts necessary to be built-in and lesser technically complex solution that may be maintenance intensive.

According to an embodiment, the first gas outlet and the second gas outlet are placed adjacent in a direction parallel to the longitudinal axis L. According to this embodiment, the first and second gas outlet are consecutive in the direction parallel to the longitudinal axis L and can be blocked or unblocked by axial movement of the shaft.

According to the invention, the valve comprises a cavity, the gas inlet being arranged on a first side of the cavity and the first gas outlet and the second gas outlet being arranged on a second side opposite the first side. Opposite is hereby defined as any position of the first and the second outlet that does not overlap the angle of the gas inlet position on the cavity. The valve body is arranged inside the cavity and is leading the gas stream in a desired direction.

According to the invention, the cavity has a cylindrical form. This matches common construction shapes, which makes it easier to manufacture in an economic way.

The shape of the first valve body element is matching the cylindrical shape of the cavity and the second valve body element is disc-shaped. This way, the valve body provides an element for blocking or unblocking the gas inlet and an element for blocking or unblocking the first gas outlet and/or the second gas outlet simultaneously.

According to a second aspect of the invention, a system for the recirculation of exhaust gas in a vehicle is provided. The system comprises at least one gas inlet, at least one first gas outlet and one second gas outlet and a valve. The valve is adapted in a way that makes it suitable for both blocking and unblocking the gas flow from the gas inlet towards the first gas outlet and/or the second gas outlet. This system has the advantages described above in connection with the valve.

According to an embodiment, the first gas outlet is part of an exhaust gas system, while the second gas outlet leads exhaust gas towards the engine. This embodiment has the advantage, that

Further advantages, advantageous embodiments and developments of the invention will become apparent from the exemplary embodiments which are described below in association with the schematic figures.
- Figure 1: shows a longitudinal section of a valve according to a first embodiment of the invention in a closed position;
- Figure 2: shows the valve according to figure 1 in a closed position and in a different perspective view;
- Figure 3: shows the valve according to figure 1 in a first open position;
- Figure 4: shows the valve according to figure 1 in a second open position.

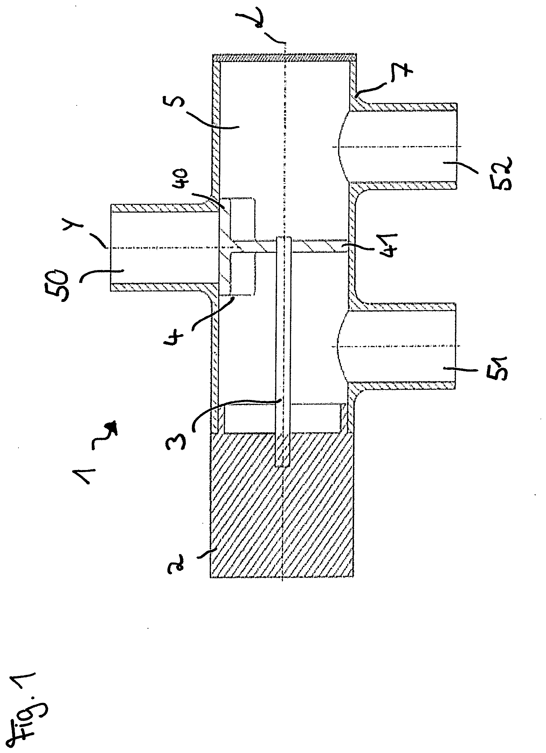

Figure 1 shows a valve 1 for controlling gas flow, for example an EGR-valve. The valve 1 has a housing 7 with at least one gas inlet 50, one first gas outlet 51 and one second gas outlet 52.

The valve 1 comprises a valve device which controls gas flow from the gas inlet 50 to the first gas outlet 51 and/or the second gas outlet 52. The gas flow is indicated by arrows 8.

A valve body 4 is located in a default position inside a cavity 5. The valve body 4 comprises a first valve body element 40 and a second valve body element 41, which are fixedly connected to each other. In the default position, the gas inlet 50 is blocked by the first valve body element 40. Hence, gas is prevented from entering the cavity 5. In figure 1, the second valve body element 41 is located between a first gas outlet 51 and a second gas outlet 52.

The first valve body element 40 has a form to match the inner wall of the cavity 5. In this embodiment it is designed as a section of a cylindrical surface and the second valve body element 41 is formed disc-shaped to be able to block a cross section of the cavity 5.

The first valve body element 40 and the second valve body element 41 are orientated perpendicular to each other, i.e. the cylindrical surface of the first valve body element 40 is coaxial with a longitudinal axis L of the cavity and the second valve body element 41 is extending perpendicular to longitudinal axis L.

The valve body 4 is fixedly connected with an axially movable shaft 3, which enables changes of the valve body position inside the cavity 5. This shaft 3 is driven by an actuator 2 along the longitudinal axis L.

The gas inlet 50 is arranged on a first side of the cavity 5 and along an axis Y. The first gas outlet 51 as well as the second gas outlet 52 are adjacently arranged on a second side of the cavity 5. In this embodiment, their orientation is parallel to the axis Y. In other embodiments, their orientation may be at a different angle.

In this embodiment, the first gas outlet 51 and the second gas outlet 52 are arranged on the same angle on the cavity 5 surface. In other embodiments, they might be arranged on different angles. In the embodiment shown in figure 1, the flow path from the gas inlet 50 to the first and second gas outlet 51, 52 is blocked.

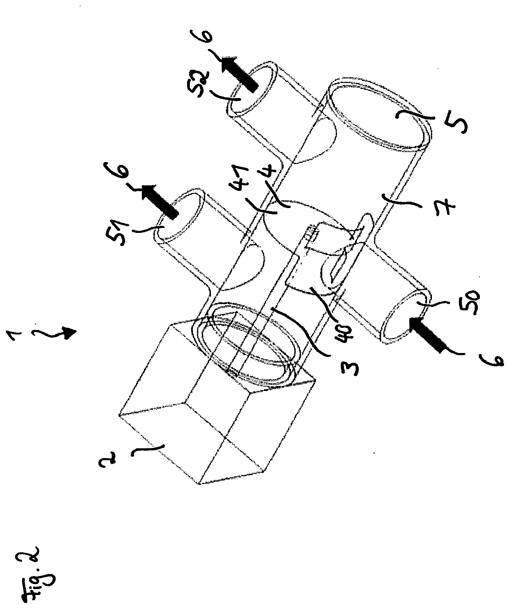

Figure 2 shows a perspective view of the embodiment shown in figure 1. The matching form of the first valve body element 40 and the cavity 5 is clearly visible as well as the discshape of the second valve body element 41.

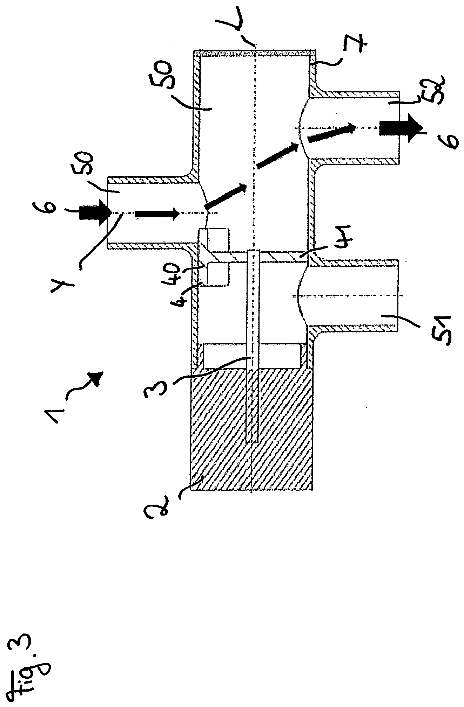

Figure 3 shows a valve body position, wherein the gas inlet 50 is unblocked as well as the second gas outlet 52, while the first gas outlet 51 is blocked by the second valve body element 41. The valve body 4 is brought into this position by the shaft 3, which is driven by the actuator 2.

In this position of the valve 1, gas is able to flow into the cavity 5. The amount of inflowing gas can be varied via movement of the valve body 4. If it is moved towards the second gas outlet 52, the first valve body element 40 covers more and more of the gas inlet 50, which causes a lower gas flow volume into the cavity 5 and out of the second gas outlet 52.

In this embodiment, it is also possible to move the shaft 3 far left, which leads to unblocking the gas inlet 50 and both first gas outlet 51 and second gas outlet 52. In this case, gas is enabled to flow both ways at once.

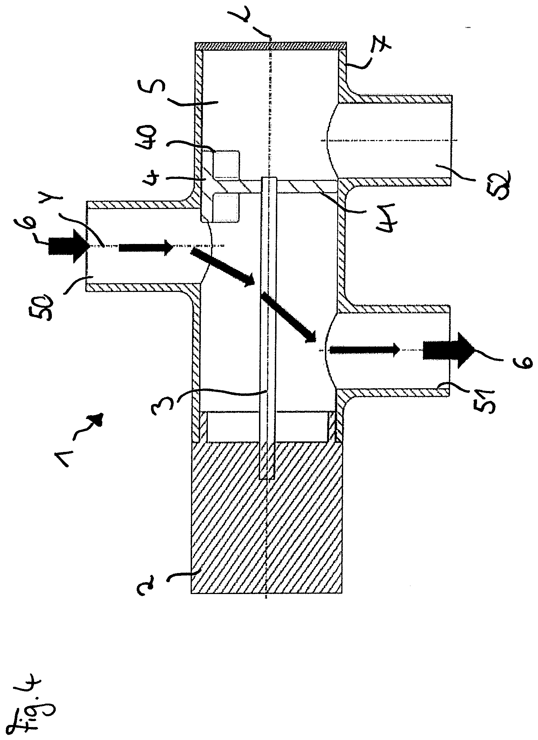

Figure 4 shows another possible position of the valve body 4: the gas inlet 50 and the first gas outlet 51 are unblocked, while the second gas outlet 52 is blocked by the second valve body element 41. The valve body 4 may also be moved far right to open gas inlet 50 and both first gas outlet 51 and second gas outlet 52 at the same time.

In a further example, the valve body 4 can be moved far left or right, so that the gas inlet 50, the first gas outlet 51 and the second gas outlet 52 are opened. This option makes it possible to further adjust the flow rates.

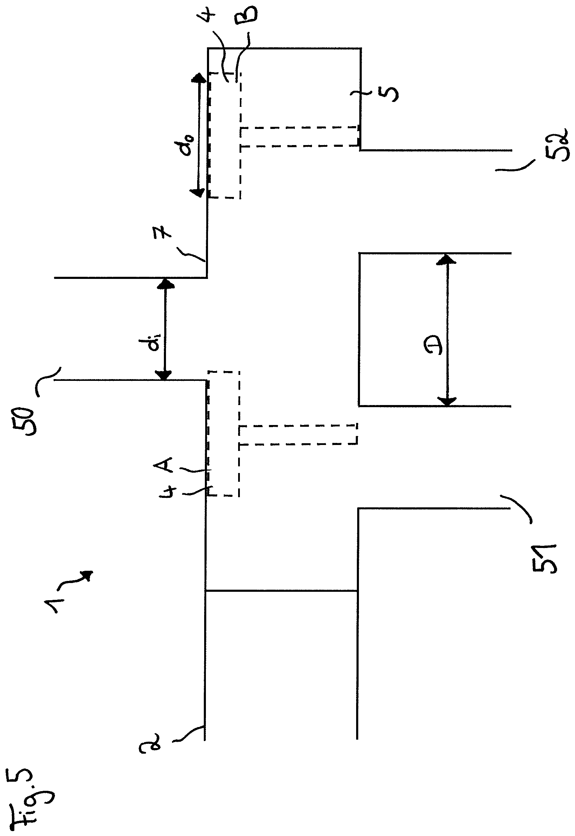

Figure 5 shows possible valve body positions inside the cavity 5 of the valve 1. The axial extension d₀ of the first valve body element 40 is of the same dimensions or greater than the axial extension dᵢ of the gas inlet 50 to ensure tight blocking of the gas inlet 50 in the default position. The distance D between the first gas outlet 51 and the second gas outlet 52 should be of sufficient size compared to d₀ to ensure undisturbed operation of the valve.

Two positions of the valve body 4 are shown in Figure 5, outlined only schematically in dashed lines. When the valve body 4 is moved to the left (indicated by "A"), the gas inlet 50 and the second gas outlet 52 are completely unblocked. The first gas outlet 51 is partially unblocked. If the valve body 4 is moved far to the right inside the cavity 5 (as indicated by "B"), the gas inlet 40 is completely unblocked as well as the first gas outlet 51 and the second gas outlet 52.

## Claims

1. Valve (1) for controlling gas flow, comprising
- a housing (7) with at least one gas inlet (50); at least one first gas outlet (51) and one second gas outlet (52);
- a valve device adapted for blocking or unblocking the first gas outlet (51) and/or the second gas outlet (52) and/or the gas inlet (50);
the valve device comprising
- an axially movable shaft (3) driven by an actuator (2) ;
- a valve body (4) comprising a first valve body element (40) and a second valve body element (41) and being arranged on the axially movable shaft (3);
- the first valve body element (40) being adapted for blocking or unblocking the gas inlet (50);
- the second valve body element (41) being adapted for blocking or unblocking the first gas outlet (51) or the second gas outlet (52);
- the first valve body element (40) and the second valve body element (41) being fixedly connected to each other;
wherein the valve body (4) is adapted to block or unblock the gas inlet (50), the first gas outlet (51) and the second gas outlet (52) via linear movement along a longitudinal axis L of the shaft (3),
wherein the valve (1) comprises a cavity (5) having a cylindrical shape, the gas inlet (50) being arranged on a first side of the cavity (5) and the first gas outlet (51) and the second gas outlet (52) being arranged on a second side opposite the first side of the cavity (5), wherein the first valve body element (40) is designed as a section of a cylindrical surface and the shape of the first valve body element (40) is matching the cylindrical shape of an inner wall of the cavity (5), wherein the second valve body element (41) is disc-shaped to be able to block a cross section of the cavity (5), wherein the valve body (4) is movable to unblock gas inlet (50) and both first gas outlet (51) and second gas outlet (52) at the same time.

2. Valve (1) according to claim 1,
wherein a volume of a gas flow is adjustable by means of the valve body (4).

3. Valve (1) according to claim 1 or 2,
wherein the valve body (4) is arranged to block the gas inlet (50) in a default position.

4. Valve (1) according to any one of claims 1 to 3,
wherein the valve body (4) is movable to block the first gas outlet (51) or the second gas outlet (52) while unblocking the gas inlet (50).

5. Valve (1) according to any one of claims 1 to 3,
wherein the valve body (4) is movable to unblock the first gas outlet (51) by blocking the second gas outlet (52) and vice versa.

6. Valve (1) according to any one of the claims 1 to 5,
wherein the first gas outlet (51) and the second gas outlet (52) are placed adjacent in a direction parallel to the longitudinal axis L.

7. System for the recirculation of exhaust gas in a vehicle, comprising
- at least one gas inlet (50), at least one first gas outlet (51) and one second gas outlet (52);
- a valve (1) according to any of claims 1 to 6, the valve (1) being adapted for blocking or unblocking gas flow from the gas inlet (50) to the first gas outlet (51) and/or the second gas outlet (52).

8. System according to claim 7,
wherein the first gas outlet (51) is part of an exhaust gas system, while the second gas outlet (52) leads exhaust gas to the engine.

## Patentansprüche

1. Ventil (1) zum Steuern eines Gasstroms, das Folgendes aufweist
- ein Gehäuse (7) mit mindestens einem Gaseinlass (50); mindestens einem ersten Gasauslass (51) und einem zweiten Gasauslass (52);
- eine Ventilvorrichtung, die ausgelegt ist, den ersten Gasauslass (51) und/oder den zweiten Gasauslass (52) und/oder den Gaseinlass (50) zu blockieren oder freizugeben;
wobei die Ventilvorrichtung aufweist
- eine axial bewegliche Welle (3), die durch einen Aktuator (2) angetrieben wird;
- einen Ventilkörper (4), der ein erstes Ventilkörperelement (40) und ein zweites Ventilkörperelement (41) aufweist und an der axial beweglichen Welle (3) angeordnet ist;
- wobei das erste Ventilkörperelement (40) ausgelegt ist, den Gaseinlass (50) zu blockieren oder freizugeben;
- wobei das zweite Ventilkörperelement (41) ausgelegt ist, den ersten Gasauslass (51) oder den zweiten Gasauslass (52) zu blockieren oder freizugeben;
- wobei das erste Ventilkörperelement (40) und das zweite Ventilkörperelement (41) fest miteinander verbunden sind;
wobei der Ventilkörper (4) ausgelegt ist, den Gaseinlass (50), den ersten Gasauslass (51) und den zweiten Gasauslass (52) über eine lineare Bewegung entlang einer Längsachse L der Welle (3) zu blockieren oder freizugeben,
wobei das Ventil (1) einen Hohlraum (5) mit einer zylindrischen Form aufweist, der Gaseinlass (50) an einer ersten Seite des Hohlraums (5) angeordnet ist und der erste Gasauslass (51) und der zweite Gasauslass (52) an einer zweiten Seiten gegenüber der ersten Seite des Hohlraums (5) angeordnet sind,
wobei das erste Ventilkörperelement (40) als ein Teil einer zylindrischen Fläche ausgebildet ist und die Form des ersten Ventilkörperelements (40) der zylindrischen Form einer Innenwand des Hohlraums (5) entspricht, wobei das zweite Ventilkörperelement (41) scheibenförmig ist, um in der Lage zu sein, einen Querschnitt des Hohlraums (5) zu blockieren, wobei der Ventilkörper (4) beweglich ist, um den Gaseinlass (50) und sowohl den ersten Gasauslass (51) als auch den zweiten Gasauslass (52) gleichzeitig freizugeben.

2. Ventil (1) nach Anspruch 1,
wobei ein Volumen eines Gasstroms mittels des Ventilkörpers (4) einstellbar ist.

3. Ventil (1) nach Anspruch 1 oder 2,
wobei der Ventilkörper (4) angeordnet ist, den Gaseinlass (50) in einer Standardposition zu blockieren.

4. Ventil (1) nach einem der Ansprüche 1 bis 3,
wobei der Ventilkörper (4) beweglich ist, um den ersten Gasauslass (51) oder den zweiten Gasauslass (52) zu blockieren, während der Gaseinlass (50) freigegeben wird.

5. Ventil (1) nach einem der Ansprüche 1 bis 3,
wobei der Ventilkörper (4) beweglich ist, um den ersten Gasauslass (51) durch Blockieren des zweiten Gasauslasses (52) freizugeben und umgekehrt.

6. Ventil (1) nach einem der Ansprüche 1 bis 5,
wobei der erste Gasauslass (51) und der zweite Gasauslass (52) in einer Richtung parallel zu der Längsachse L aneinander angrenzend platziert sind.

7. System zum Umwälzen von Abgas in einem Fahrzeug, das Folgendes aufweist
- mindestens einen Gaseinlass (50), mindestens einen ersten Gasauslass (51) und einen zweiten Gasauslass (52);
- ein Ventil (1) nach einem der Ansprüche 1 bis 6, wobei das Ventil (1) ausgelegt ist, einen Gasstrom von dem Gaseinlass (50) zu dem ersten Gasauslass (51) und/oder dem zweiten Gasauslass (52) zu blockieren oder freizugeben.

8. System nach Anspruch 7,
wobei der erste Gasauslass (51) Teil eines Abgassystems ist, während der zweite Gasauslass (52) Abgas zum Motor führt.

## Revendications

1. Soupape (1) pour réguler un débit de gaz, comprenant
- un logement (7) avec au moins une entrée de gaz (50) ; au moins une première sortie de gaz (51) et une seconde sortie de gaz (52) ;
- un dispositif à soupape adapté pour bloquer ou débloquer la première sortie de gaz (51) et/ou la seconde sortie de gaz (52) et/ou l'entrée de gaz (50) ;
la dispositif à soupape comprenant
- un arbre axialement mobile (3) entraîné par un actionneur (2) ;
- un corps de soupape (4) comprenant un premier élément de corps de soupape (40) et un second élément de corps de soupape (41) et étant agencé sur l'arbre axialement mobile (3) ;
- le premier élément de corps de soupape (40) étant adapté pour bloquer et débloquer l'entrée de gaz (50) ;
- le second élément de corps de soupape (41) étant adapté pour bloquer et débloquer la première sortie de gaz (51) ou la seconde sortie de gaz (52) ;
- le premier élément de corps de soupape (40) et le second élément de corps de soupape (41) étant raccordés de façon fixe l'un à l'autre ;
dans laquelle le corps de soupape (4) est adapté pour bloquer ou débloquer l'entrée de gaz (50), la première sortie de gaz (51) et la seconde sortie de gaz (52) par l'intermédiaire de mouvement linéaire le long d'un axe longitudinal L de l'arbre (3),
dans laquelle la soupape (1) comprend une cavité (5) ayant une forme cylindrique, l'entrée de gaz (50) étant agencée sur un premier côté de la cavité (5) et la première sortie de gaz (51) et la seconde sortie de gaz (52) étant agencées sur un second côté opposé au premier côté de la cavité (5), dans laquelle le premier élément de corps de soupape (40) est conçu sous forme de section d'une surface cylindrique et la forme du premier élément de corps de soupape (40) est assortie à la forme cylindrique d'une paroi intérieure de la cavité (5), dans laquelle le second élément de corps de soupape (41) est en forme de disque pour être capable de bloquer une section transversale de la cavité (5), dans laquelle le corps de soupape (4) est mobile pour débloquer l'entrée de gaz (50) et à la fois la première sortie de gaz (51) et la seconde sortie de gaz (52) en même temps.

2. Soupape (1) selon la revendication 1,
dans laquelle un volume d'un débit de gaz est ajustable au moyen du corps de soupape (4).

3. Soupape (1) selon la revendication 1 ou 2,
dans laquelle le corps de soupape (4) est agencé pour bloquer l'entrée de gaz (50) dans une position par défaut.

4. Soupape (1) selon l'une quelconque des revendications 1 à 3,
dans laquelle le corps de soupape (4) est mobile pour bloquer la première sortie de gaz (51) ou la seconde sortie de gaz (52) tout en débloquant l'entrée de gaz (50).

5. Soupape (1) selon l'une quelconque des revendications 1 à 3, dans laquelle le corps de soupape (4) est mobile pour débloquer la première sortie de gaz (51) en bloquant la seconde sortie de gaz (52) et vice versa.

6. Soupape (1) selon l'une quelconque des revendications 1 à 5, dans laquelle la première sortie de gaz (51) et la seconde sortie de gaz (52) sont placées de façon adjacente dans une direction parallèle à l'axe longitudinal L.

7. Système pour la recirculation de gaz d'échappement dans un véhicule, comprenant
- au moins un entrée de gaz (50), au moins un première sortie de gaz (51) et une seconde sortie de gaz (52) ;
- une soupape (1) selon un quelconque des revendications 1 à 6, la soupape (1) étant adaptée pour bloquer et débloquer le débit de gaz depuis l'entrée de gaz (50) jusqu'à la première sortie de gaz (51) et/ou la seconde sortie de gaz (52).

8. Système selon la revendication 7,
dans lequel la première sortie de gaz (51) fait partie d'un système de gaz d'échappement, alors que la seconde sortie de gaz (52) conduit le gaz d'échappement vers le moteur.
